# EUROPÄISCHE PATENTSCHRIFT

(11) **EP 4 433 797 B1**
(45) Veröffentlichungstag und Bekanntmachung des Hinweises auf die Patenterteilung: **28.10.2026**
(21) Anmeldenummer: 23703671.0
(22) Anmeldetag: 10.01.2023
(51) Int. Cl.: G01N 1/34, G01N 1/30, G01N 1/31, B01L 3/00, B01L 7/00, G01N 1/36, G01N 35/00

(54) **VERFAHREN ZUR DEPARAFFINIERUNG VON FORMALIN-FIXIERTEM PARAFFIN-EINGEBETTETEM GEWEBE**
METHOD FOR DEPARAFFINIZING FORMALIN-FIXED, PARAFFIN-EMBEDDED TISSUE
PROCÉDÉ DE DÉPARAFFINAGE DE TISSU INCLUS DANS DE LA PARAFFINE FIXÉ AU FORMOL

(30) Priorität: 12.05.2022 DE 102022111890
(43) Veröffentlichungstag der Anmeldung: 25.09.2024
(73) Patentinhaber: Dermagnostix GmbH, 86316 Friedberg (DE)
(72) Erfinder: PAUST, Nils, 86316 Friedberg (DE); DORMANNS, Katharina, 86316 Friedberg (DE); SCHLENKER, Franziska, 86316 Friedberg (DE); WEBER, Lucca, 86316 Friedberg (DE); EYERICH, Stefanie, 86316 Friedberg (DE); GARZORZ-STARK, Natalie, 86316 Friedberg (DE)
(74) Vertreter: Lobemeier, Martin Landolf
(86) Internationale Anmeldenummer: PCT/DE2023/100009
(87) Internationale Veröffentlichungsnummer: WO 2023/217310

(56) Entgegenhaltungen:
- EP-A1- 2 737 948
- WO-A1-2017/202729
- US-A1- 2010 015 715
- US-A1- 2021 387 179

## Beschreibung

Die Erfindung betrifft ein Verfahren zum Deparaffinieren von Formalin-fixiertem Paraffin-eingebettetem Gewebe (FFPE).

Die Fixierung von Geweben mit Formalin und die anschließende Einbettung in Paraffin gehört zu den häufigsten Methoden zur Konservierung und Stabilisierung von biologischem Gewebe, die zur histologischen Untersuchung verwendet wird. Insbesondere Tumorgewebe liegt im Rahmen pathologischer und onkologischer Untersuchungen überwiegend als Formalin-fixiertes Paraffin-eingebettetes Material vor, wobei dieses auch in der Diagnostik entzündlicher Krankheiten oder Autoimmunkrankheiten Verwendung findet.

Wenngleich sich die Verwendung von Formalin-fixiertem Paraffin-eingebettetem Gewebe also auch im Rahmen der Histopathologie als grundsätzlich vorteilhaft erwiesen hat, bereitet diese Art der Gewebekonservierung bei der molekularen, speziell genetischen Analyse Probleme, da insbesondere die durch die Fixierung mit Formalin erfolgten chemischen Modifikationen zunächst rückgängig gemacht werden müssen. Hierzu wurden verschiedene Extraktions- und Renaturierungsmethoden entwickelt, die Formalin-fixiertes Paraffin-eingebettetes Gewebe (FFPE) auch nach Jahren der Biopsie für molekulare Diagnoseverfahren zugänglich machen.

So ist beispielsweise aus der EP 1 825 246 B1 ein Verfahren zur Deparaffinierung von Formalin-fixiertem Paraffin-eingebettetem Gewebe (FFPE) bekannt, bei dem das Paraffin in eine Mikroemulsion überführt und vom Gewebe abgespült wird. Aus der EP 2 780 453 B1 hingegen ist ein Verfahren bekannt, bei dem das Gewebe dadurch vom Paraffin befreit wird, dass das Paraffin erwärmt und in eine aus Silikon und Wachs bestehende lipophile Phase überführt wird.

Daneben sind aus der US 2009/0246782 A1 und der KR 101796110 B1 Verfahren zur zentrifugal-basierten Prozessierung von biochmischen Proben bekannt, bei denen Paraffin zum Einsatz kommt.

In WO 2017/202729 A1 wird das Paraffin mittels eines temperierten (Mineral-)Öls aufgeschmolzen und das Gewebe mittels einer wässrigen Lösung lysiert. Anschließend wird dieses Zwei-Phasen-Gemisch aus der ersten Kammer, in die das Formalin-fixierte Paraffin-eingebettete Gewebe (FFPE) eingebracht worden ist, ausgeleitet und in einem Phasenseparationskanal mittels eines hydrophoben Filters in eine unpolare Phase bestehend aus mit dem extrahierten Paraffin vermengten Öl und eine polare Phase bestehend aus einer die lysierten Gewebebestandteile enthaltenden wässrigen Flüssigkeit getrennt, die daraufhin separat weiter prozessiert werden können.

Diese bekannten Verfahren setzen zur Beseitigung des Paraffins einen relativ hohen manuellen Aufwand oder komplexen apparativen Aufbau voraus, bevor das vom Paraffin befreite Gewebe weiteren molekularen Untersuchungen zugänglich ist. Jedenfalls eignen sich die bekannten Verfahren weitgehend nicht für eine automatische Prozessierung einer Probe im Rahmen molekularer Analysen einschließlich der vorbereitenden Maßnahme der Deparaffinierung.

Aufgabe der Erfindung ist es daher, ein Verfahren zur molekularen Analyse von Formalin-fixiertem Paraffin-eingebettetem Gewebe (FFPE) zu schaffen, das weitgehend automatisiert und mit geringem manuellen Aufwand und mit geringem apparativen Aufbau erfolgen kann.

Diese Aufgabe wird erfindungsgemäß durch das Verfahren mit den Merkmalen von Anspruch 1 gelöst. Die Unteransprüche geben vorteilhafte Ausgestaltungen der Erfindung wieder.

Grundgedanke der Erfindung ist es, ein Verfahren zum Deparaffinieren von Formalin-fixiertem Paraffin-eingebettetem Gewebe (FFPE) derart in einem Centrifugal Microfluidic Biochip, insbesondere einer Centrifugal Microfluidic Bio-Disk zu integrieren, dass sich die an sich bekannten Schritte zum Analysieren des Gewebes hinsichtlich wenigstens einer molekularen Eigenschaft auf an sich bekannte Weise anschließen können. Die Analyse kann sich dabei beispielsweise auf das Vorhandensein, das Fehlen oder das gesteigerte bzw. verminderte Vorhandensein eines genetischen Merkmals oder eines Proteins oder eines Merkmals auf Genexpressionsebene beziehen.

Mittels eines erfindungsgemäß ausgestalteten Lab-on-a-Disk-Systems (Centrifugal Microfluidic Biochip, Centrifugal Microfluidic Bio-Disk oder sonstige zentrifugalmikrofluidische Testkartusche), das die Vorbereitung und Analyse von Formalin-fixiertem Paraffin-eingebettetem Gewebe (FFPE) vereint, ist es möglich, arbeitsintensive und fehleranfällige Laborroutinen zu automatisieren und verschiedene Arbeitsabläufe von der Probenaufbereitung bis zur Datenanalyse in nur einem Arbeitsgang durchzuführen. Insbesondere kann mittels des vorgeschlagenen Systems eine wesentlich schnellere Analyse von Gewebeproben und eine daran angepasste Therapie erfolgen.

Um speziell die hochsensitive Diagnostik molekularer Marker in FFPE zu ermöglichen, muss das Paraffin zuvor von der Probe getrennt werden. Insbesondere wird Paraffin vom Gewebeblock abgetrennt, um so eine anschließende Lyse der Zellbestandteile und die Zugänglichkeit von DNA und/oder RNA zu ermöglichen, ohne dass - wie im Stand der Technik vorgeschlagen - ein zusätzliches Wax/Silikongemisch, ein komplexes Lysereagenz mit zusätzlichen Komponenten zur Verflüssigung von Paraffin oder eine Ultraschalleinheit im Prozessziergerät notwendig sind.

Erfindungsgemäß wird also ein Verfahren zur Deparaffinierung von Formalin-fixiertem Paraffin-eingebettetem Gewebe in einem Centrifugal Microfluidic Biochip mit einem eine Mehrzahl von Kammern aufweisenden fluidischen System vorgeschlagen, das die folgenden Schritte aufweist:
a. Einbringen von Formalin-fixiertem Paraffin-eingebettetem Gewebe (FFPE) in eine erste Kammer eines fluidischen Systems eines Centrifugal Microfluidic Biochips,
b. Einleiten eines Fluids in die erste Kammer,
c. Schmelzen des Paraffins durch Temperieren der ersten Kammer auf eine Temperatur oberhalb der Schmelztemperatur des Paraffins,
d. Abscheiden des geschmolzenen Paraffins durch Drehen des Centrifugal Microfluidic Biochip um eine Drehachse,
e. Erstarrenlassen des abgeschiedenen flüssigen Paraffins durch Temperieren wenigstens eines Teilbereichs der ersten Kammer auf eine Temperatur unterhalb der Schmelztemperatur des Paraffins, und
f. Ausleiten der um das Paraffin depletierten, das Gewebe enthaltenden flüssigen Phase aus der ersten Kammer.

Der Centrifugal Microfluidic Biochip ist bevorzugt als Centrifugal Microfluidic Biodisk, also als Scheibe ausgebildet, wobei die Drehachse den Mittepunkt der Centrifugal Microfluidic Biodisk darstellt. Jedenfalls wird der Centrifugal Microfluidic Biochip im Wesentlichen als Zylinder ausgebildet sein, der eine Grundfläche, eine Mantelfläche und eine Deckfläche aufweist. Die Drehachse des Centrifugal Microfluidic Biochips erstreckt sich dabei insbesondere durch die Höhe des Centrifugal Microfluidic Biochips. Speziell ist der Centrifugal Microfluidic Biochip so ausgebildet, dass eine erste Kammer vorgesehen ist, die zur Aufnahme von Formalin-fixiertem Paraffin-eingebettetem Gewebe (FFPE) eingerichtet ist.

Beim verwendeten Fluid handelt es sich bevorzugt um eine wässrige Lösung, die insbesondere als Puffer ausgebildet ist. Höchst bevorzugt handelt es sich bei dem Fluid um einen Lysepuffer, der - an die Art des Gewebes angepasst - zum Lysieren des Gewebes geeignet ist, um die im Gewebe enthaltenen Moleküle einer molekularbiologischen Analyse zugänglich zu machen. Dabei kann es sich um eine DNA- oder RNA-Analyse oder auch um eine Proteinanalyse handeln. Der verwendete Lysepuffer kann Puffersalze (z. B. Tris-HCl) und ionische Salze (z. B. NaCl), um den pH-Wert und die Osmolarität des Lysats zu regulieren, und zusätzlich Detergentien (z.B. Triton X-100, SDS o.ä.) enthalten.

Das erfindungsgemäße Verfahren wird höchst bevorzugt unter Verwendung eines Lysepuffers durchgeführt, der bevorzugt das Enzym Proteinase-K aufweist, das für den Abbau von Proteinen in Zelllysaten und zur Freisetzung von Nukleinsäuren verwendet wird.

Jedenfalls weist das Fluid eine sich von der Dichte von Paraffin unterscheidende Dichte auf, sodass eine Abscheidung des durch Wärmeeintrag geschmolzenen Paraffins aufgrund von Dichteunterschieden erfolgen kann. Speziell weist das Fluid eine größere Dichte als flüssiges Paraffin auf, sodass das geschmolzene Paraffin dem das Gewebe umgebende und gegebenenfalls lysierende Fluid aufschwimmt.

Dabei ist es unerheblich, ob das Fluid bereits vor Einbringen des Formalin-fixierten Paraffin-eingebetteten Gewebes (FFPE) in die erste Kammer in der ersten Kammer vorhanden ist, gemeinsam mit dem Formalin-fixierten Paraffin-eingebetteten Gewebe (FFPE) in die erste Kammer eingebracht wird oder im Anschluss daran in die erste Kammer eingeleitet wird. Mit anderen Worten kommt es auf die Reihenfolge der Schritte a und b nicht entscheidend an, sodass der Schritt b auch vor dem Schritt a vorgenommen werden kann. Entscheidend ist lediglich, dass eine flüssige Phase bereitgestellt wird, die ein Abscheiden des das Gewebe einbettenden Paraffins ermöglicht.

Die als Formalin-fixiertes Paraffin-eingebettetes Gewebe (FFPE) vorliegende Probe wird bevorzugt in einer ersten Kammer in einem Lysepuffer/Proteinase-K-Gemisch erwärmt, wodurch das Paraffin aufgeschmolzen wird. Das verflüssigte Paraffin schwimmt dem Fluid bzw. dem höchst bevorzugt verwendeten Lysepuffer/Proteinase-K-Gemisch bei Rotation des Biochips aufgrund des Dichteunterschieds zwischen dem Lysepuffer und dem Paraffin in Bezug auf den Drehpunkt innenliegend auf. In der flüssigen Phase, in der deparaffinierte Gewebestücke/-partikel vorliegen, findet bevorzugt der enzymatische Verdau und das Decrosslinking durch Proteinase-K und Lysepuffer statt. Dadurch wird insbesondere der Übergang der RNA in die flüssige Phase ermöglicht.

Das Temperieren der ersten Kammer in Schritt c. und in Schritt e. erfolgt bevorzugt durch Temperatureintrag in den Centrifugal Microfluidic Biochip durch die Grundfläche des Centrifugal Microfluidic Biochips und somit durch eine quer zur Drehachse angeordnete erste Kammerwandung. Besonders bevorzugt erfolgt der Temperatureintrag mittels einer in einer den Centrifugal Microfluidic Biochip drehenden Rotationsvorrichtung vorgesehenen Heizeinrichtung eines geeigneten, den Centrifugal Microfluidic Biochip aufnehmenden Analysegeräts.

Das Temperieren der ersten Kammer in Schritt c. erfolgt für eine erste vorbestimmte Zeit auf eine Temperatur von > 49 °C und damit auf eine Temperatur oberhalb des Schmelzpunkts von Paraffin. Speziell erfolgt das Temperieren der ersten Kammer auf eine Temperatur von 55 °C bis 65 °C.

Weiter ist bevorzugt vorgesehen, dass Schritt c. das Temperieren der ersten Kammer für eine zweite vorbestimmte Zeit auf eine Temperatur von zwischen 70 °C und 90 °C aufweist, die zum Decrosslinking von im Gewebe enthaltenen Molekülen erzeugt wird.

Erfolgt das Temperieren in Schritt c. und in Schritt e. durch Temperatureintrag durch eine quer zur Drehachse angeordnete erste Kammerwandung, ist weiter bevorzugt vorgesehen, dass Schritt e. das Ausbilden eines sich durch die Höhe des Centrifugal Microfluidic Biochips erstreckenden Temperaturgradienten umfasst, wobei die Temperatur der ersten Kammerwandung, durch die der Temperatureintrag erfolgt, oberhalb des Schmelzpunkts von Paraffin und die Temperatur einer der ersten Kammerwandung (z. B. der Grundfläche des Centrifugal Microfluidic Biochips) gegenüberliegenden zweiten Kammerwandung (z. B. der Deckfläche des Centrifugal Microfluidic Biochips) unterhalb des Schmelzpunkts von Paraffin liegt. Dieses kann besonders bevorzugt dadurch erfolgen, dass Schritt e. das Temperieren der ersten Kammerwandung auf eine Temperatur oberhalb des Schmelzpunktes von Paraffin, insbesondere auf eine Temperatur von 65 °C aufweist, wobei der Centrifugal Microfluidic Biochip zur Kühlung unterhalb der Schmelztemperatur von Paraffin der zweiten Kammerwandung um die Drehachse mit einer gegenüber Schritt d. höheren Frequenz gedreht wird.

Grundsätzlich besteht aber die Möglichkeit den Temperaturgradienten in jeglicher Richtung auszubilden, wobei die Geometrie der ersten Kammer so ausgebildet sein muss, dass der Temperatureintrag so geregelt werden kann, dass die Temperatur an der der ersten Kammerwandung dem Schmelzpunkt von Paraffin entspricht oder oberhalb dessen Schmelzpunkts liegt und die Temperatur an der der ersten Kammerwandung gegenüberliegenden zweiten Kammerwandung unterhalb des Schmelzpunkts von Paraffin liegt, sodass das Paraffin an der zweiten Kammerwandung erstarren kann.

Das Abscheiden des Paraffins durch partielle Erstarrung wird bevorzugt durch ein Temperieren der Kammer oberhalb des Schmelzpunkts des Paraffins bei gleichzeitiger Rotation erzielt, die ausreichend ist, damit in der flüssigen Paraffinsäule ein Temperaturgradient entsteht (die Kammer wird der der Heizeinrichtungen gegenüberliegenden Oberseite des Biochips durch Luftverwirbelungen und dadurch Wärmeabtrag kühler als der Schmelzpunkt von Paraffin) und der obere Teil der Säule aushärtet, wobei der untere noch flüssig ist.

Speziell ist vorgesehen, dass die Schritte e und f jedenfalls teilweise gleichzeitig ablaufen. Dabei kann auch vorgesehen sein, dass weitere Verarbeitungsschritte des Gewebes in der ersten Kammer vorgenommen werden, bevor dieses mit der flüssigen Phase aus der ersten Kammer ausgeleitet wird. Das Gewebe wird bevorzugt in lysierter und in der flüssigen Phase suspensierter Form vorliegen, kann jedoch auch ohne Lyse mit der flüssigen Phase ausgeleitet werden. Die Deparaffinierung, die Lyse und das Decrosslinking des Gewebes können also sowohl zeitlich als auch räumlich voneinander getrennt durchlaufen werden.

Schließlich versteht es sich, dass das Deparaffinieren als vorbereitender Schritt einer molekularen Analyse des Gewebes zu verstehen ist, sodass auch explizit ein Verfahren zur molekularen Analyse von Formalin-fixiertem Paraffin-eingebettetem Gewebe beansprucht wird, dass das erfindungsgemäße Verfahren zum Deparaffinieren aufweist, gefolgt von Schritt g. Analysieren der das lysierte Gewebe enthaltenden flüssigen Phase hinsichtlich wenigstens einer molekularen Eigenschaft auf an sich bekannte Weise.

Für die RNA-Aufreinigung einer als Formalin-fixiertem Paraffin-eingebettetes Gewebe (FFPE) vorliegenden Probe würden sich exemplarisch folgende Schritte ergeben:
1. Die Probe wird in einer ersten Kammer eines Centrifugal Microfluidic Biochips in einem Lysepuffer erwärmt, wodurch das Paraffin aufgeschmolzen wird. Das Paraffin schwimmt dann dem Lysepuffer als hydrophobe Phase auf. In der flüssigen (hydrophilen) Phase findet der enzymatische Verdau und das Decrosslinking statt. Dadurch wird der Übergang der RNA in die flüssige (hydrophile) Phase ermöglicht.
2. Das Abscheiden durch partielle Erstarrung wird durch ein Heizen der Kammer über dem Schmelzpunkt des Paraffins, bei gleichzeitiger hoher Rotation erzielt, wodurch in der flüssigen Paraffinsäule ein Temperaturgradient entsteht (Kammer wird an Oberseite durch Luftverwirbelungen und dadurch Wärmeabtrag kühler als der Schmelzpunkt von Paraffin,) und der obere Teil der Säule aushärtet, wobei der untere noch flüssig ist.
3. Danach wird Paraffin durch Erstarrung des Paraffins abgeschieden.
4. Das Lysat wird ausgeleitet und in einer weiteren Kammer mit Bindepuffer und magnetischen Partikeln gemischt.
5. Die magnetischen Partikel werden in eine dritte Kammer transferiert und dort gewaschen.
6. Schließlich werden die magnetischen Partikel werden in eine vierte Kammer transferiert und die RNA dort eluiert, sodass die aus dem Formalin-fixiertem Paraffin-eingebettetes Gewebe (FFPE) extrahierte RNA der weiteren an sich bekannten Verarbeitung zur Verfügung steht.

Die Erfindung wird im Folgenden anhand eines in der beigefügten Zeichnung dargestellten, besonders bevorzugt ausgestalteten Ausführungsbeispiels näher erläutert.

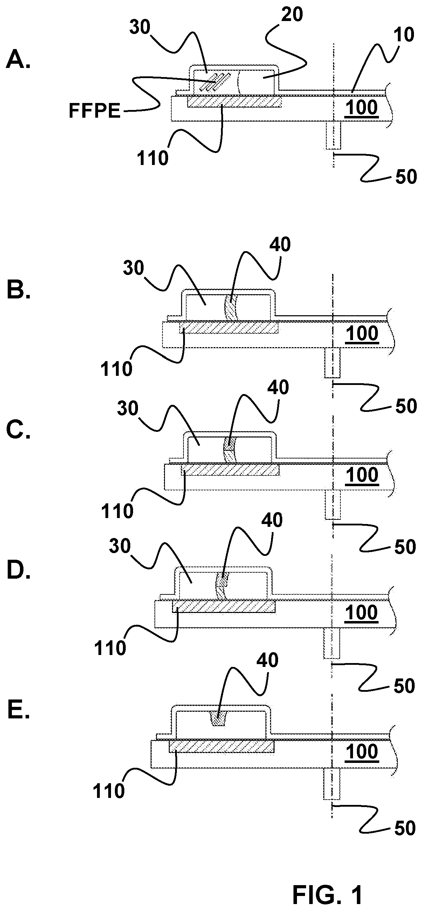

Fig. 1 zeigt insbesondere den Zustand einer in einem Centrifugal Microfluidic Biochip prozessierten FFPE-Probe während der im gezeigten Beispiel sequentiell ablaufenden Verfahrensschritte gemäß der vorliegenden Erfindung im schematischen Querschnitt. Speziell zeigt Fig. 1A einen schematischen Querschnitt durch einen in einem Analysegerät 100 angeordneten Centrifugal Microfluidic Biochip 10. Der Centrifugal Microfluidic Biochip 10 ist an sich wie bekannt aufgebaut und weist ein fluidisches System auf, von dem im dargestellten Beispiel eine erste Kammer 20 zu erkennen ist, in die Formalin-fixiertes Paraffin-eingebettetes Gewebe FFPE eingebracht ist, das von einem im Centrifugal Microfluidic Biochip 10 vorgehaltenen, als Lysepuffer ausgebildetem Fluid 30 umgeben ist.

Der Puffer 30 kann vor dem Einbringen des Formalin-fixierten Paraffin-eingebetteten Gewebes FFPE in der Kammer 20 vorgehalten sein oder nachträglich von Außen manuell hinzugegeben oder aus einer im Centrifugal Microfluidic Biochip 10 vorgesehenen weiteren Kammer, in das Fluid vorgehalten wird, in die erste Kammer 20 eingeleitet werden.

Jedenfalls wird - wie in Fig. 1B dargestellt - das das Gewebe umgebende Paraffin 40 durch Temperieren der ersten Kammer 20 auf eine Temperatur oberhalb der Schmelztemperatur des Paraffins 40 aufgeschmolzen. Der Temperatureintrag erfolgt dabei durch eine im Analysegerät 100 vorgesehene Heizzone 110, die eine Temperatureintrag von Seiten der Grundfläche des Centrifugal Microfluidic Biochips 10 bewirkt. Bei gleichzeitigem Drehen des Centrifugal Microfluidic Biochip 10 um die Drehachse 50 wird das dem Fluid aufschwimmende flüssige Paraffin 40 aufgrund des Dichteunterschieds zwischen dem Fluid 30 und dem flüssigen Paraffin 40 abgeschieden.

Liegen getrennte Phasen vor, lässt man das abgeschiedene flüssige Paraffin 40 durch Temperieren wenigstens eines Teilbereichs der ersten Kammer 20 auf eine Temperatur unterhalb der Schmelztemperatur des Paraffins 40 erstarren. Insbesondere wird der Temperatureintrag in die erste Kammer 20 mittels der Heizzone 110 des Analysegeräts 100 so geregelt, dass sich durch die Höhe des Centrifugal Microfluidic Biochips 10 ein Temperaturgradient ausbildet, der dazu führt, dass das flüssige Paraffin 40 an der der Heizzone gegenüberliegenden, kühleren Wandung der ersten Kammer 20 erstarrt.

Das zwischenzeitlich lysierte Gewebe wird in Fig. 1D und Fig. 1E aus der ersten Kammer 20 ausgeleitet und der weiteren Prozessierung zugeführt, wobei sich das Volumen des flüssigen Paraffins 40 verringert und das Volumen des an der Wandung erstarrten Paraffins 40 zunimmt.

## Patentansprüche

1. Verfahren zum Deparaffinieren von Formalin-fixiertem Paraffin-eingebettetem Gewebe (FFPE) in einem Centrifugal Microfluidic Biochip (10) mit einem eine Mehrzahl von Kammern (20) aufweisenden fluidischen System,
**gekennzeichnet durch** die Schritte:
a. Einbringen von Formalin-fixiertem Paraffin-eingebettetem Gewebe (FFPE) in eine erste Kammer (20) eines fluidischen Systems eines Centrifugal Microfluidic Biochips (10),
b. Einleiten eines Fluids (30) in die erste Kammer (20),
c. Schmelzen des Paraffins (40) durch Temperieren der ersten Kammer (20) auf eine Temperatur oberhalb der Schmelztemperatur des Paraffins (40),
d. Abscheiden des geschmolzenen Paraffins (40) durch Drehen des Centrifugal Microfluidic Biochip (10) um eine Drehachse (50),
e. Erstarren lassen des abgeschiedenen flüssigen Paraffins (40) durch Temperieren wenigstens eines Teilbereichs der ersten Kammer (20) auf eine Temperatur unterhalb der Schmelztemperatur des Paraffins (40), und
f. Ausleiten der um das Paraffin (40) depletierten, das Gewebe enthaltenden flüssigen Phase aus der ersten Kammer (20).

2. Verfahren nach Anspruch 1, **dadurch gekennzeichnet, dass** das Fluid (30) eine wässrige Lösung ist.

3. Verfahren nach einem der vorhergehenden Ansprüche, **dadurch gekennzeichnet, dass** das Fluid (30) ein Puffer ist.

4. Verfahren nach einem der vorhergehenden Ansprüche, **dadurch gekennzeichnet, dass** das Fluid (30) eine Proteinase aufweist.

5. Verfahren nach Anspruch 4, **dadurch gekennzeichnet, dass** die Protease Proteinase-K ist.

6. Verfahren nach einem der vorhergehenden Ansprüche, **dadurch gekennzeichnet, dass** Schritt b. das Einleiten eines im Centrifugal Microfluidic Biochip (10) vorgehaltenen Fluids (30) in die erste Kammer (20) aufweist.

7. Verfahren nach einem der vorhergehenden Ansprüche, **dadurch gekennzeichnet, dass** das Temperieren in Schritt c. und in Schritt e. durch Temperatureintrag durch eine quer zur Drehachse (50) angeordnete erste Kammerwandung erfolgt.

8. Verfahren nach einem der vorhergehenden Ansprüche, **dadurch gekennzeichnet, dass** Schritt c. das Temperieren der ersten Kammer (20) für eine erste vorbestimmte Zeit auf eine Temperatur von > 49 °C aufweist.

9. Verfahren nach Anspruch 8, **dadurch gekennzeichnet, dass** Schritt c. das Temperieren der ersten Kammer (20) auf eine Temperatur von 55 °C bis 65 °C aufweist.

10. Verfahren nach einem der Ansprüche 8 und 9, **dadurch gekennzeichnet, dass** Schritt c. das Temperieren der ersten Kammer (20) für eine zweite vorbestimmte Zeit auf eine Temperatur von zwischen 70 °C und 90 °C zum Decrosslinking von im Gewebe enthaltenen Molekülen aufweist.

11. Verfahren nach einem der vorhergehenden Ansprüche, **dadurch gekennzeichnet, dass** Schritt e. das Ausbilden eines Temperaturgradienten umfasst, wobei die Temperatur der ersten Kammerwandung, durch die der Temperatureintrag erfolgt, oberhalb des Schmelzpunkts von Paraffin (40) und die Temperatur einer der ersten Kammerwandung gegenüberliegenden zweiten Kammerwandung unterhalb des Schmelzpunkts von Paraffin (40) liegt.

12. Verfahren nach Anspruch 11, **dadurch gekennzeichnet, dass** Schritt e. das Temperieren der ersten Kammerwandung auf eine Temperatur oberhalb des Schmelzpunkts von Paraffin (40) aufweist, wobei der Centrifugal Microfluidic Biochip (10) zur Kühlung der zweiten Kammerwandung um die Drehachse (50) mit einer gegenüber Schritt d. höheren Frequenz gedreht wird.

13. Verfahren zur molekularen Analyse von Formalin-fixiertem Paraffin-eingebettetem Gewebe (FFPE), **gekennzeichnet durch** das Verfahren nach einem der vorhergehenden Ansprüche gefolgt von Schritt g. Analysieren der das Gewebe enthaltenden flüssigen Phase hinsichtlich wenigstens einer molekularen Eigenschaft auf an sich bekannte Weise.

## Claims

1. Method for deparaffinising formalin-fixed, paraffin-embedded (FFPE) tissue in a centrifugal microfluidic biochip (10) comprising a fluidic system having a plurality of chambers (20),
**characterised by** the steps:
a. Introducing formalin-fixed, paraffin-embedded (FFPE) tissue into a first chamber (20) of the fluidic system of a centrifugal microfluidic biochip (10),
b. Injecting a fluid (30) into the first chamber (20),
c. Melting the paraffin (40) by heating the first chamber (20) to a temperature above the melting point of the paraffin (40),
d. Separating the molten paraffin (40) by rotating the centrifugal microfluidic biochip (10) about an axis of rotation (50),
e. Allowing the separated liquid paraffin (40) to solidify by controlling the temperature of at least a portion of the first chamber (20) to a temperature below the melting point of the paraffin (40), and
f. Discharging the liquid phase, which has been depleted of paraffin (40) and contains the tissue, from the first chamber (20).

2. Method according to claim 1, **characterised in that** the fluid (30) is an aqueous solution.

3. Method according to one of the preceding claims, **characterised in that** the fluid (30) is a buffer.

4. Method according to one of the preceding claims, **characterised in that** the fluid (30) comprises a proteinase.

5. Method according to claim 4, **characterised in that** the protease is proteinase K.

6. Method according to one of the preceding claims, **characterised in that** step b. comprises introducing a fluid (30) held in the centrifugal microfluidic biochip (10) into the first chamber (20).

7. Method according to one of the preceding claims, **characterised in that** the temperature control in step c. and in step e. is effected by the introduction of heat through a first chamber wall arranged transversely to the axis of rotation (50).

8. Method according to one of the preceding claims, **characterised in that** step c. comprises heating the first chamber (20) to a temperature of > 49 °C for a first predetermined time.

9. Method according to claim 8, **characterised in that** step c. comprises heating the first chamber (20) to a temperature of 55 °C to 65 °C.

10. Method according to any one of claims 8 and 9, **characterised in that** step c. comprises heating the first chamber (20) for a second predetermined time to a temperature of between 70 °C and 90 °C in order to decross-link molecules contained in the tissue.

11. Method according to one of the preceding claims, **characterised in that** step e. comprises forming a temperature gradient, wherein the temperature of the first chamber wall through which the heat is introduced is above the melting point of paraffin (40) and the temperature of a second chamber wall opposite the first chamber wall is below the melting point of paraffin (40).

12. Method according to claim 11, **characterised in that** step e. comprises heating the first chamber wall to a temperature above the melting point of paraffin (40), wherein the centrifugal microfluidic biochip (10) is rotated about the axis of rotation (50) at a higher frequency than in step d. in order to cool the second chamber wall.

13. Method for the molecular analysis of formalin-fixed, paraffin-embedded (FFPE) tissue, **characterised by** the method according to one of the preceding claims, followed by step g: analysing the liquid phase containing the tissue for at least one molecular property in a manner known per se.

## Revendications

1. Procédé pour le déparaffinage de tissus fixés au formol et inclus en paraffine (FFPE) dans une biopuce microfluidique centrifuge (10) comportant un système fluidique présentant une pluralité de chambres (20),
**caractérisé par** les étapes consistant à :
a. introduire un tissu fixé au formol et inclus en paraffine (FFPE) dans une première chambre (20) d'un système fluidique d'une biopuce microfluidique centrifuge (10),
b. injecter un fluide (30) dans la première chambre (20),
c. faire fondre la paraffine (40) par régulation de la température de la première chambre (20) à une température supérieure à la température de fusion de la paraffine (40),
d. séparer la paraffine (40) fondue par rotation de la biopuce microfluidique centrifuge (10) autour d'un axe de rotation (50),
e. laisser la paraffine (40) liquide séparée se solidifier par régulation de la température d'au moins une zone partielle de la première chambre (20) à une température inférieure à la température de fusion de la paraffine (40), et
f. évacuer la phase liquide, appauvrie en paraffine (40) et contenant le tissu, hors de la première chambre (20).

2. Procédé selon la revendication 1, **caractérisé en ce que** le fluide (30) est une solution aqueuse.

3. Procédé selon l'une des revendications précédentes, **caractérisé en ce que** le fluide (30) est une solution tampon.

4. Procédé selon l'une des revendications précédentes, **caractérisé en ce que** le fluide (30) présente une protéinase.

5. Procédé selon la revendication 4, **caractérisé en ce que** la protéinase est la protéinase K.

6. Procédé selon l'une des revendications précédentes, **caractérisé en ce que** l'étape b. présente l'injection d'un fluide (30) contenu dans la biopuce microfluidique centrifuge (10) dans la première chambre (20).

7. Procédé selon l'une des revendications précédentes, **caractérisé en ce que** la régulation de la température à l'étape c. et à l'étape e. est effectuée par apport de chaleur à travers une première paroi de chambre disposée perpendiculairement à l'axe de rotation (50).

8. Procédé selon l'une des revendications précédentes, **caractérisé en ce que** l'étape c. présente la régulation de la température de la première chambre (20) à une température > 49 °C pendant un premier laps de temps prédéterminé.

9. Procédé selon la revendication 8, **caractérisé en ce que** l'étape c. présente la régulation de la température de la première chambre (20) à une température allant de 55 °C à 65 °C.

10. Procédé selon l'une des revendications 8 et 9, **caractérisé en ce que** l'étape c. présente la régulation de la température de la première chambre (20) à une température comprise entre 70 °C et 90 °C pendant un second laps de temps prédéterminé afin de déréticuler les molécules contenues dans le tissu.

11. Procédé selon l'une des revendications précédentes, **caractérisé en ce que** l'étape e. comprend la formation d'un gradient de température, dans lequel la température de la première paroi de chambre, à travers laquelle est effectué l'apport de chaleur, est supérieure au point de fusion de la paraffine (40) et la température d'une seconde paroi de chambre faisant face à la première paroi de chambre est inférieure au point de fusion de la paraffine (40).

12. Procédé selon la revendication 11, **caractérisé en ce que** l'étape e. présente la régulation de la température de la première paroi de chambre à une température supérieure au point de fusion de la paraffine (40), dans lequel la biopuce microfluidique centrifuge (10) est mise en rotation autour de l'axe de rotation (50) à une fréquence supérieure à celle de l'étape d. afin de refroidir la seconde paroi de chambre.

13. Procédé pour l'analyse moléculaire de tissus fixés au formol et inclus en paraffine (FFPE), **caractérisé par** le procédé selon l'une des revendications précédentes, suivi de l'étape g. d'analyse de la phase liquide contenant le tissu pour reconnaître au moins une propriété moléculaire, selon une manière connue en soi.
